# EUROPEAN PATENT APPLICATION

(11) **EP 2 194 025 A1**
(43) Date of publication of application: **09.06.2010**
(21) Application number: 08170822.4
(22) Date of filing: 05.12.2008
(51) Int. Cl.: C01B 13/18, C01B 13/36, C01F 17/00

(54) **Monodisperse nanoparticles and their application**

(71) Applicant: Koninklijke Philips Electronics N.V., 5621 BA Eindhoven (NL); Philips Intellectual Property & Standards GmbH, 20099 Hamburg (DE)
(72) Inventor: The designation of the inventor has not yet been filed
(74) Representative: Jungen, Carmen

(57) **Abstract**

The present application discloses a method for the preparation of nanoparticles from an aqueous solution of lanthanide salts using citric acid and ethylenediaminetetraacetic acid (EDTA). The use of both complexing agents simultaneously allows for the preparation of monodisperse nanoparticles with very small size of less than 50 nm.

## Description

### FIELD OF THE INVENTION

The present application relates to a method for the preparation of nanoparticles, especially monodisperse nanoparticles, from aqueous solution using citric acid and ethylenediaminetetraacetic acid. The present application also relates to the nanoparticles and the use of these nanoparticles.

### BACKGROUND OF THE INVENTION

Nanoscale materials have found numerous applications to improve the performance of products and technical processes. This is for example medical diagnostics, medical imaging, and medical therapy, wherein nanoscale matter is applied as luminescent marker, as molecule carrier, as contrast agent, or as a precursor of scintillator ceramics. Moreover, nanoscale particles are widely applied for the preparation of functional layers onto glass parts of radiation sources and information displays and onto (luminescent) pigment particles, in the latter case referred to as particle coatings. Finally, nanoscale oxides are of enormous importance as heterogeneous catalysts (e.g. MgO, Ln₂O₃, CeO₂) for many processes in chemical and petrochemical industry.

Many physical and chemical processes have thus been developed to obtain nanoscale particles with defined shape and electrochemical surface properties as required by the envisioned application. However, most of the processes known have limitations with respect to nanoscale particle properties, process yield, cost-price, and/or production volume. To obtain small nanoscale materials with a particle size of less than 50 nm, most often so-called wet-chemical synthesis routes are applied. This implies that a subsequent high temperature post-treatment might be necessary to remove water or organic residues from the initially precipitated nanoscale powders. Thermal post-treatment has often also a positive impact on the crystallinity, bulk density, photoluminescence quantum efficiency, and other optical, electrical or catalytical properties.

However, the main drawback of thermal post-treatment is that nanoscale particles start to agglomerate and to grow due to diffusion in the solid state. The speed of diffusion and thus particle growth is a function of the applied temperature (profile), the type of crystal structure, and of the reactivity of the surface, i.e. of the chemical potential. The latter can be restricted to a certain extent by inactivating the surface. A generally accepted strategy for this purpose is the coordination of surface atoms (states) by organic ligands, e.g. by TOPO in the case of phosphides. The use of such ligands, however, is very expensive and requires specific method steps.

A method for the preparation of nanoparticles is known from Chinese Patent Application CN 1523077.

An object of the present application is thus to provide a cheap and easy method for the preparation of nanoparticles, especially very small nanoparticles with a monodisperse particle size distribution. The nanoparticles produced by this method should especially be suitable for imaging applications.

These and other objects are achieved by the subject-matter of the independent claims. Preferred embodiments of the invention are given in the dependent claims.

### SUMMARY OF THE INVENTION

The present application discloses in a first aspect a method for the preparation of nanoparticles comprising the steps of
a) dissolving at least one metal salt in an aqueous solvent, wherein the metal is selected from scandium, ytterbium, lanthanum, cerium, praseodymium, neodymium, samarium, europium, gadolinium, terbium, dysprosium, holmium, erbium, thulium, ytterbium, and lutetium;
b) adding citric acid and ethylenediaminetetraacetic acid (EDTA) to the solution;
c) forming stabilized nanoparticles by homogeneous controlled alkaline hydrolysis of the metal complexes;
d) reducing the amount of aqueous solvent by evaporation of solvent; and
e) annealing the resulting nanoparticles.

In a preferred embodiment, the metal salt is in the form of an acetate, formiate, sulfate, nitrate, nitrite, chloride, bromide, or proprionate.

In another preferred embodiment, the molar ratio of EDTA to metal ions of the metal salt is ≥ 1:1, preferably in the range of 1:1 to 2:1, more preferably in the range of 1:1 to 1.5:1, and most preferably in the range of 1:1 to 1.2:1 or 1:1 and 1.1:1.

In still another preferred embodiment, the molar ratio of citric acid to EDTA is in the range of 0.05:1 to 1:1, more preferably in the range of 0.1:1 to 1:1, and most preferably in the range of 0.5:1 1 to 1:1.

In yet another preferred embodiment, the aqueous solvent has a water content of at least 80 wt.-%, preferably at least 95 wt.-%, more preferably at least 98 wt.-%, even more preferably at least 99.5 wt.-%, and most preferably 100 wt.-%.

In another preferred embodiment, the nanoparticles are of the form M₂O₃, (M^{a}₁₋ₓM^{b}ₓ)₂O₃, or (M^{a}_{1-x-y} M^{b}ₓM^{c}_{y})₂O₃, wherein M, M^{a}, M^{b}, and M^{c} are independently selected from scandium, ytterbium, lanthanum, cerium, praseodymium, neodymium, samarium, europium, gadolinium, terbium, dysprosium, holmium, erbium, thulium, ytterbium, and lutetium, and x and y are in the rage of 0 to 1 with the proviso that x+y ≤ 1.

In still another preferred embodiment, the stabilized nanoparticles are formed at a temperature in the range of 25 to 120°C, preferably in the range of 30 to 100°C, more preferably in the range of 35 to 80°C, and/or at a pressure in the range of 0.8 to 10 bar, preferably in the range of 1 to 5 bar.

In yet another preferred embodiment, the evaporation of the solvent is achieved at a temperature in the range of 25 to 120°C, preferably in the range of 30 to 100°C, more preferably in the range of 35 to 80°C, and/or at a pressure of below 2 bar, preferably in the range of 0.001 to 1 bar.

In another preferred embodiment, the annealing is achieved at a temperature in the range of 500 to 1200°C, preferably in the range of 600 to 1000°C, more preferably in the range of 750 to 950°C, and most preferably in the range of 800 to 900°C, and preferably for a period of 2 to 10 hours.

In yet another preferred embodiment, after the annealing, the cooling to room temperature is a natural cooling of the nanoparticles, preferably over a period of less than 10 hours, more preferably less than 5 hours, and most preferably within 2 to 10 hours.

In still another preferred embodiment, the nanoparticles have a size of 1 to 50 nm, preferably a size in the range of 10 to 40 nm and especially 2 to 30 nm or 4 to 15 nm. According to yet another embodiment of the present invention, the particle size of the obtained nanoparticles is below 40, more preferably below 30 and most preferably below 20. The mean particle size may range from 2 to 20 or 3 to 15.

In still another preferred embodiment, the nanoparticles have a monodisperse particle distribution.

A second aspect of the application relates to nanoparticles that can be obtained by the method of the first aspect.

Finally, in a third aspect, the use of nanoparticles for coating of display glass, windows glass, pigments, preferably luminescent pigments, tapes, preferably plastic tapes, semiconductor elements, or a heterogeneous catalyst, or the use in a device for medical diagnostics, medical imaging, or medical therapy is disclosed. The inventive nanoparticles also may be used as a contrast agent or precursor thereof, a luminescent marker or precursor thereof or as molecular carrier.

### BRIEF DESCRIPTION OF THE DRAWINGS

The invention is further illustrated by the following figures, in which:
- Fig. 1: is a histographic particle size distribution of the particles according to Example 1 before annealing;
- Fig. 2: is the transmission spectrum of nanoparticles of Example 1;
- Fig. 3a and b: are the excitation and emission spectra, respectively, of annealed nanoparticles of Example 1;
- Fig. 4a and b: are SEM images of annealed nanoparticles of Example 1;
- Fig. 5: is an X-ray powder diffraction pattern of annealed nanoparticles of Example 1;
- Fig. 6: is a histographic particle size distribution of nanoparticles of Example 2 before annealing;
- Fig. 7: is a transmission spectrum of the nanoparticles of Example 2;
- Fig. 8: shows excitation and emission spectra of annealed nanoparticles of Example 2;
- Fig. 9a and b: are SEM images of annealed nanoparticles of Example 2;
- Fig. 10: is an X-ray powder diffraction pattern of annealed nanoparticles of Example 2;
- Fig. 11: shows excitation and emission spectra of annealed microparticles of Comparative Example 4;
- Fig. 12a to d: are SEM images of annealed microparticles of Comparative Example 4;
- Fig. 13: is an X-ray power diffraction pattern of annealed microparticles of Comparative Example 4; and
- Fig. 14: is a histographic particle size distribution of stabilized Nd₂O₃ particles of Example 3.

### DETAILED DESCRIPTION OF EMBODIMENTS

The present invention refers to a method for the preparation of nanoparticles. The method comprises the steps of dissolving a metal salt and ethylenediaminetetraacetic acid (EDTA) in an aqueous solvent, adding citric acid to the solution; forming stabilized nanoparticles by homogeneous controlled alkaline hydrolysis of the metal complexes; reducing the amount of aqueous solvent by evaporation of solvent; and annealing the resulting nanoparticles.

The method is based on the use of both citric acid and EDTA while preparing the nanoparticles. The simultaneous use of both complexing agents allows for the preparation of small, monodisperse nanoparticles of the corresponding metal sesquioxides. The inventors found that the use of both citric acid and EDTA for the purposes of the present invention is mandatory. If only citric acid is used as a complexing agent, a metal citrate will form from the metal ions and precipitate from the solution. Such precipitates are in uncontrolled form and size, and cannot suitably contribute to a formation of well defined nanoparticles. Similarly, if only EDTA is used as a complexing agent, small, monodispersed nanoparticles will not be formed. The use of only EDTA results in the formation of inhomogeneous particles with a size of usually above 100 nm.

As a starting material or precursor material for the metal sesquioxide nanoparticles, water soluble metal salts are used. When dissolved in water, metal ions are formed from the metal salts.

With the use of both complexing agents, i.e. EDTA and citric acid, at the same time, the formation of large particles e.g. with a mean size of 200 to 800 nm can be prevented, and particles with a small size, spherical shape and a monodisperse distribution can be obtained.

The method of the present application is performed in an aqueous solvent. The aqueous solvent is a solvent based on water as the main solvent. However, other solvents, like alcohols, may be present. Preferably, the water content of the aqueous solvent is at least 80 wt.-%, more preferably at least 95 wt.-%, even more preferably at least 98 wt.-%, and most preferably at least 99.5 wt.-%. In a very preferred embodiment, the solvent is pure water at 100 wt.-%. The water can be de-ionized or distilled water.

The aqueous solvent is used to dissolve at least one metal salt. The metal of the metal salt may be selected from scandium, ytterbium, lanthanum, cerium, praseodymium, neodymium, samarium, europium, gadolinium, terbium, dysprosium, holmium, erbium, thulium, ytterbium, and lutetium. Especially preferred, the metal is selected from gadolinium, neodymium and ytterbium.

The metal salt used in the present application is a water soluble salt. Preferably, the metal salt is selected from metal acetate, metal formiate, metal sulfate, metal nitrate, metal chloride, or metal propionate. In an especially preferred embodiment, the metal salt is a metal acetate. However, any other water-soluble metal salt can be used.

In a first step a) of the method, the at least one metal salt and EDTA are dissolved in the aqueous solvent to form a solution of the metal ions complexed with EDTA in the aqueous solvent. If more than one metal salt is used, nanoparticles containing different metals can be formed with the method of the present application. A person skilled in the art will be able to select the kind of metal salt(s) as well as the amount of (different) metal salt(s) in order to obtain a desired composition of metal oxides in the final nanoparticles.

For forming the solution of metal salt(s) and EDTA, it is possible to first add EDTA to the solvent and then dissolve the metal salt(s) in the solution of EDTA, or to first dissolve the metal salt(s) in the solvent and subsequently add EDTA. Both compounds, i.e. the metal salt(s) and EDTA, can also be added simultaneously to the solvent to form the solution of EDTA and metal salt(s).

The EDTA can be added in the form of any available salt, or in the acid form. Possible salts are ammonium, sodium, potassium, or calcium salts, or combinations thereof. Whenever reference is made to ethylenediaminetetraacetic acid or EDTA within this application, all forms of the acid and the different deprotonated forms should be encompassed.

After dissolving the at least one metal salt and EDTA in the aqueous solvent, the complexing agent citric acid is added in step b) of the method.

Preferably, every metal ion within the solution is complexed by at least one molecule of EDTA. Thus, the molar ratio of EDTA to metal ions resulting from the metal salt is at least 1:1. More preferably, the molar ratio of EDTA to metal ions is in the range of 1:1 to 2:1, even more preferably in the range of 1:1 to 1.5:1, and most preferably in the range of 1:1 to 1.2:1 or 1:1 to 1.1:1.

Similarly, the molar amount of citric acid is preferably less than or equal to the molar amount of EDTA. Accordingly, the molar ratio of citric acid to EDTA can be in the range of 0.05:1 to 1:1, more preferably in the range of 0.1:1 to 1:1, and most preferably in the range of 0.5:1 1 to 1:1.

The use of an additional amount of either citric acid or EDTA will not disturb the method of the present application, however, an excess amount of organic material can deteriorate the final nanoparticles as it has to be removed during annealing, and might result in impurities of the final nanoparticles. It is thus preferred to use EDTA and citric acid in an amount which is actually required, i.e. not more than necessary.

The method of the present application can be performed without any polymerization additives, such as glycols, like ethylene glycol. It is preferred that no polymerization additives are used or added at any stage of the method of the present application. Most preferably, the solution consists of an aqueous solvent, at least one soluble metal salt, citric acid and EDTA.

In a subsequent step c) of the method, stabilized nanoparticles are formed. This method step is a homogeneous, controlled alkaline hydrolysis of the metal complexes. During this step, a sol is formed from the solution of the complexed metal ions and transformed into a gel. The step is initiated by addition of a base to rise the pH value.

In a preferred embodiment, the base is added slowly, e.g. dropwise in solution. The base can be selected from ammonia, aliphatic primary, secondary, or tertiary amines, the hydroxides of an alkali or alkaline earth metal, or an organic base. Examples of aliphatic amines are methylamine, dimethylamine, trimethylamine, ethylamine, diethylamine, triethylamine, n-propylamine, iso-propylamine, n-butylamine, sec-butylamine, and t-butylamine.

Before the addition of a base, the pH of the solution is preferably below 7, more preferably below 6, even more preferably below 5, and most preferably in the range of 4 to 5. At the end of the sol-gel-formation, the pH of the aqueous solvent is preferably below 8, more preferably below 9, even more preferably below 10, and most preferably below 10.5. It the pH exceeds 10.5, metal hydroxides may precipitate and disturb the formation of the particles.

Preferably, method step c) is performed at a temperature in the range of 25 to 120°C, more preferably at 30 to 100°C, even more preferably at 35 to 80°C. The pressure applied in this method step is preferably in the range of 0.8 to 10 bar, more preferably 1 to 5 bar. In a very preferred embodiment of the present application, the formation of the stabilized nanoparticles is performed at ambient pressure, i.e. at approximately 1 bar. The amount of solvent may be reduced during this step. However, according to a preferred embodiment, the amount of solvent is not or only slightly reduced while forming the nanoparticles by preventing or reducing the evaporation of solvent.

The formation of the stabilized nanoparticles can be achieved while stirring the solution, or without stirring. Preferably, the formation is performed at elevated temperature without stirring. It is assumed that without stirring the solution, small air bubbles are not generated within the solution. Such air bubbles could serve as a seed for the formation of sol particles. If no air bubbles are present, a more homogenous formation of nanoparticles can be achieved. The resulting nanoparticles are stabilized in the solution. Stabilized nanoparticles in the meaning of the present invention are nanoparticles which essentially do not undergo agglomeration (e.g. due to their interaction with surfactants or other substances).

In a step d) of the method, the amount of aqueous solvent in the solution is reduced by evaporation of the solvent. The reduction of the solvent can be accelerated at an elevated temperature, preferably in the range of 25 to 120°C, more preferably in the range of 30 to 100°C, and even more preferably in the range of 35 to 80°C. The evaporation of the solvent can also be achieved at a pressure of below 2 bar, more preferably at a reduced pressure of 0.001 to 1 bar.

The stabilized nanoparticles formed have a chemical formula of M₂O₃, (M^{a}₁₋ₓM^{b}ₓ)₂O₃, or (M^{a}_{1-x-y} M^{b}ₓM^{c}_{y})₂O₃, wherein M, M^{a}, M^{b}, and M^{c} are independently selected from scandium, ytterbium, lanthanum, cerium, praseodymium, neodymium, samarium, europium, gadolinium, terbium, dysprosium, holmium, erbium, thulium, ytterbium, and lutetium, and x and y are in the rage of 0 to 1 with the proviso that x+y ≤ 1. A synonymous expression for a composition of formula (M^{a}₁₋ₓ M^{b}ₓ)₂O₃ is formula M^{a}₂O_{3:}M^{b}, wherein some of the M^{a} is replaced by M^{b} or represent M^{b}. According to an embodiment of the application, up to 10 mol-% of M^{a} may be replaced by M^{b}. Preferably, the amount of M^{b} is less than 5 mol-%, more preferably in the range of 0.1 to 5 mol-%.

Depending on the selection and amount of the metal salts used in step a) of the method, different nanoparticles can be obtained. A person skilled in the art will be able to produce any given nanoparticle according to any of the chemical formula above by selecting appropriate starting materials.

The resulting nanoparticles are stabilized within the aqueous solution. The nanoparticles preferably have a particle size of less than 50 nm and preferably in the range of 1 to 40 nm, especially in the range of 2 to 30 nm, more preferably less than 20 nm, especially in the range of 2 to 20 nm and even more preferably less than 15 nm, especially in the range of 4 to 15 nm. According to yet another embodiment of the present invention, the mean particle size of the obtained nanoparticles is below 40, more preferably below 30 and most preferably below 20. The mean particle size may range from 5 to 20.

The mean particle size can be determined by dynamic light scattering methods in solution (e.g. QELS).

In another especially preferred embodiment, the nanoparticles have a monodisperse particle distribution, i.e. the particles are similar in size or have a narrow particle size distribution. In a preferred embodiment, the d₅₀ value of the size of the nanoparticles, i.e. 50% (by number) of the nanoparticles, is within 10 % of the mean particle size. In an alternative embodiment, the d₉₀ value of the particle size is within 30 % (by number) of the mean particle size.

In a final step e), the nanoparticles are annealed. The annealing process can be performed within a temperature range of 500 to 1200°C, preferably in the range of 600 to 1000°C, even more preferably in the range of 750 to 950°C, and most preferably in the range of 800 to 900°C. In a very preferred embodiment, the nanoparticles are maintained at the elevated annealing temperature for a period of 2 to 10 hours.

During annealing, the final nanoparticles are formed and remaining organic material is removed. Annealing comprises a thermal treatment of the nanoparticles at an elevated temperature.

After maintaining the nanoparticles at an elevated temperature, the nanoparticles are cooled to room temperature, preferably over a period of less than 10 hours, more preferably less than 5 hours and most preferably within 2 to 10 hours. In a very preferred embodiment, the cooling to room temperature is a natural cooling of the nanoparticles. However, it is also possible to actively cool the nanoparticles.

During the annealing process, usually a sintering of the nanoparticles takes place. With the process of the present application, unwanted distortions of the spherical morphology, like neck formation, can be avoided. The resulting nanoparticles or agglomerations of nanoparticles can be (re-)dispersed in water or ethyl alcohol yielding a transparent suspension that can be used for imaging purposes or for the preparation of transparent functional layers.

In the following, the invention will be illustrated by way of Examples. These Examples should not be interpreted as restricting the scope of the present invention.

### EXAMPLES

### Example 1

### Preparation of Nd₂O₃:Yb nanoparticles

19.57 mmol neodymium acetate and 1.03 mmol ytterbium acetate are dissolved in deionized water. Then, 20.6 mmol ammonium EDTA and 10.29 mmol citric acid are added subsequently. A clear, transparent, aqueous solution containing stabilised Nd₂O₃:Yb nanoparticles is obtained by the homogeneous and controlled alkaline hydrolysis of the neodymium and ytterbium complexes by addition of ammonia to form nanoparticles of approximately 1 to 2 nm in size. The nanoparticles are stabilized in the aqueous solution.

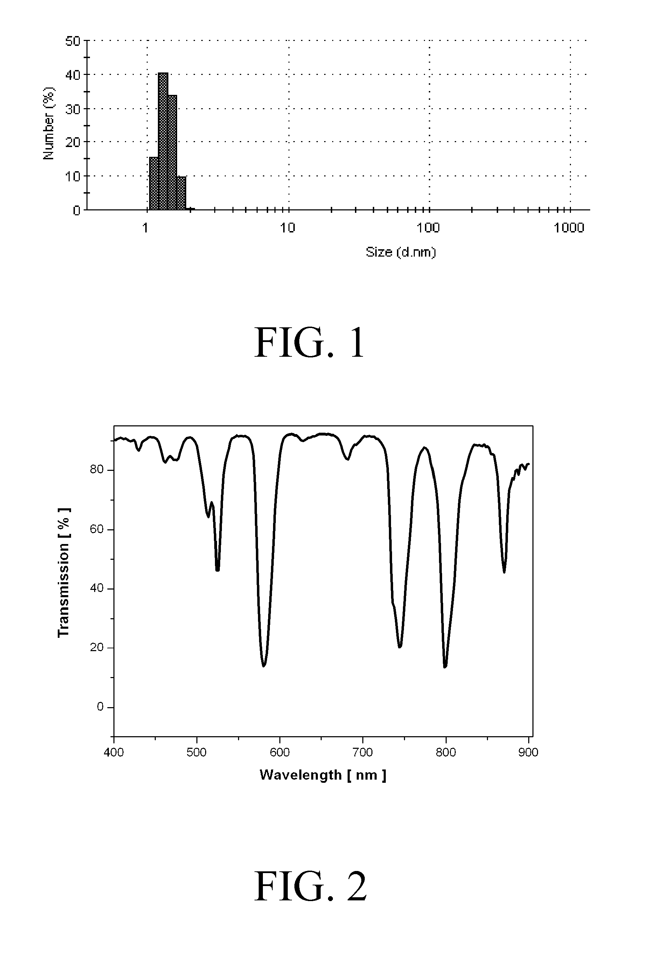

FIG. 1 shows the histographic particle size distribution of the stabilized nanoparticles in aqueous solution as obtained by dynamic light scattering. The mean particle size of the nanoparticles is approximately 1.5 nm, with a maximum (40 % of the particles) at 1.294 nm. The transmission spectrum of the nanoparticles in aqueous solution is shown in FIG. 2.

The volume of the solution of stabilised Nd₂O₃:Yb nanoparticles with a particle size diameter of approximately 1.5 nm is reduced by evaporation of water until the remainder is a solid residue, similar to a white gel. The remainder is transferred to a crucible and annealed in an oven by heating up to 800°C within 10 h, maintaining the oven at 800°C for about 10 h, and cooling down to 40°C within 10 h.

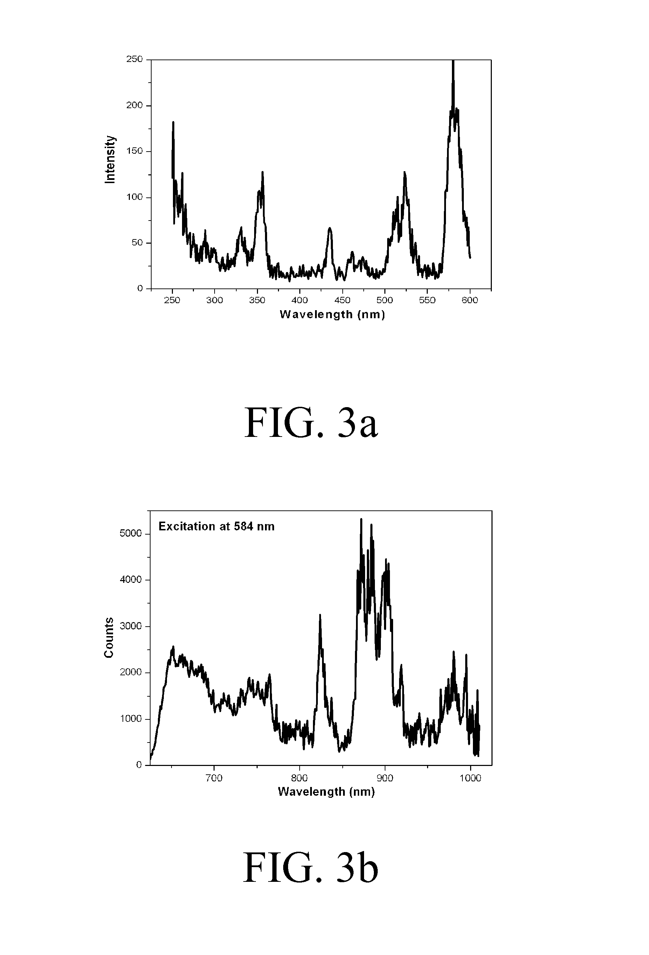

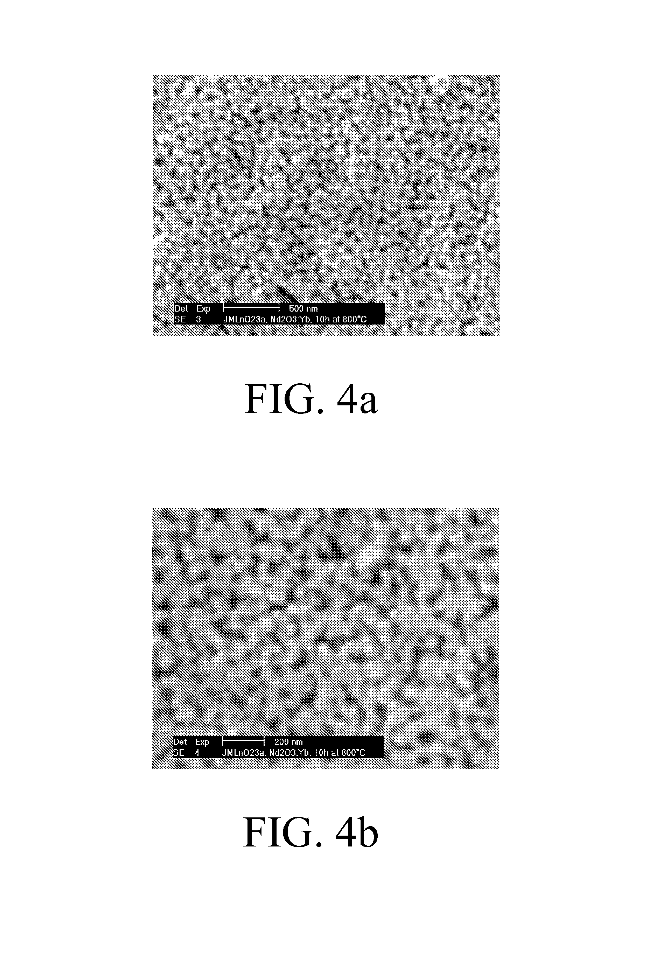

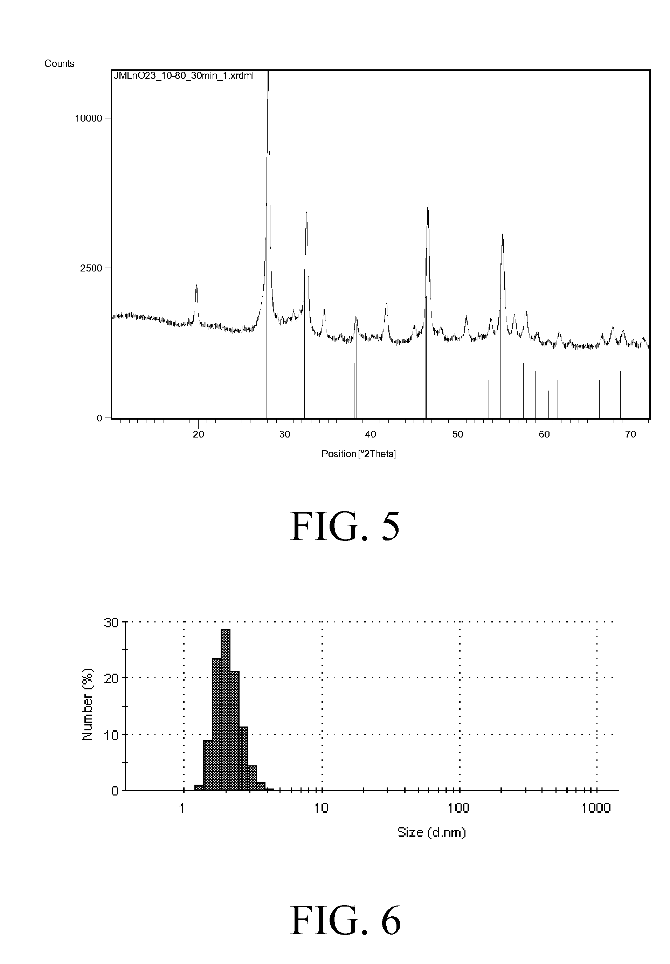

The product is an extremely voluminous and finely grained powder consisting of nanoparticles with a particle size of approximately 20-30 nm as shown by the SEM images of FIGs. 4a and 4b. FIG. 3a shows an excitation spectrum of the nanoparticles after annealing, and FIG. 3b shows an emission spectrum of the nanoparticles after annealing with an excitation at 584 nm. An X-ray powder diffraction pattern of the resulting nanoparticles is shown in FIG. 5.

### Example 2

### Preparation of Gd₂O₃:Nd nanoparticles

19.57 mmol gadolinium acetate and 1.03 mmol neodymium acetate are dissolved in deionized water. Then, 20.6 mmol sodium EDTA and 5.3 mmol citric acid are added subsequently. A clear, transparent, aqueous solution containing stabilised Gd₂O₃:Nd nanoparticles is obtained by the homogeneous and controlled alkaline hydrolysis of the neodymium and ytterbium complexes by addition of sodium hydroxide to form nanoparticles of approximately 2 nm in size. The nanoparticles are stabilized in the aqueous solution.

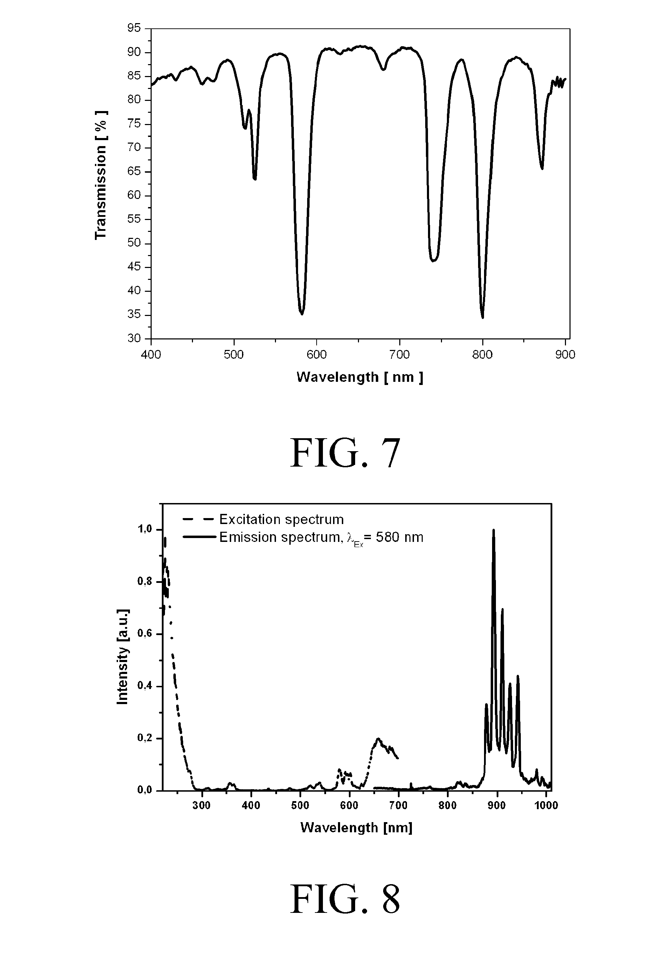

FIG. 6 shows the histographic particle size distribution of the stabilized nanoparticles in aqueous solution as obtained by dynamic light scattering. The mean particle size of the nanoparticles is approximately 2 nm, with a maximum (28,8 % of the particles) at 2.010 nm. The transmission spectrum of the nanoparticles in aqueous solution is shown in FIG. 7.

The volume of the solution of stabilised Nd₂O₃:Yb nanoparticles with a particle size diameter of approximately 1.5 nm is reduced by evaporation of water until the remainder is a solid residue, similar to a white gel. The remainder is transferred to a crucible and annealed in an oven by heating up to 800°C within 4 h, maintaining the oven at 800°C for about 4 h, and cooling down to 40°C within 4 h.

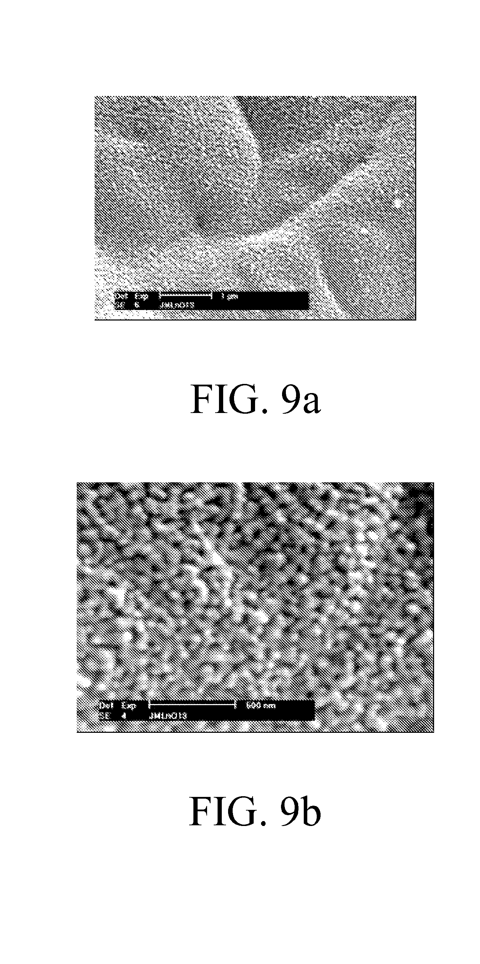

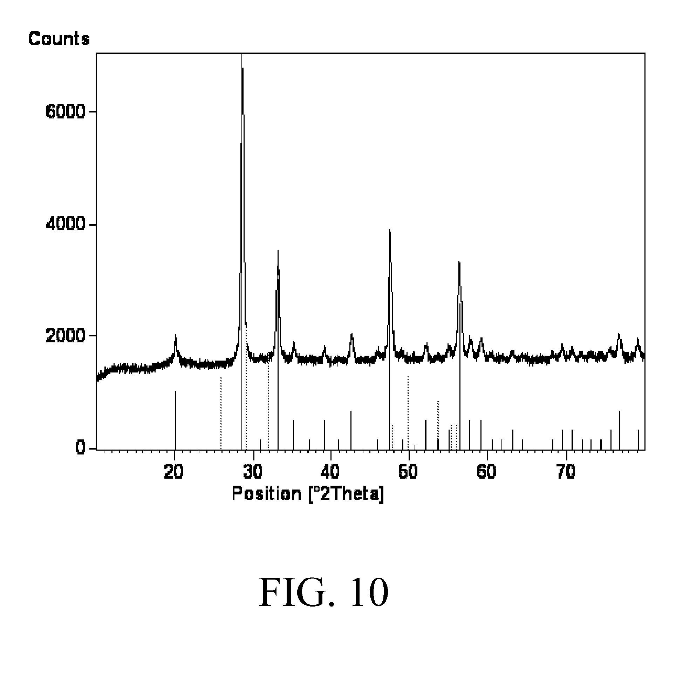

The product is an extremely voluminous and finely grained powder consisting of nanoparticles with a particle size of approximately 20-30 nm as shown by the SEM images of FIGs. 9a and 9b. FIG. 8 shows the excitation and emission (with an excitation at 580 nm) spectra of the nanoparticles after annealing. An X-ray powder diffraction pattern of the resulting nanoparticles is shown in FIG. 10.

### Example 3

### Preparation of Nd₂O₃:Yb nanoparticles

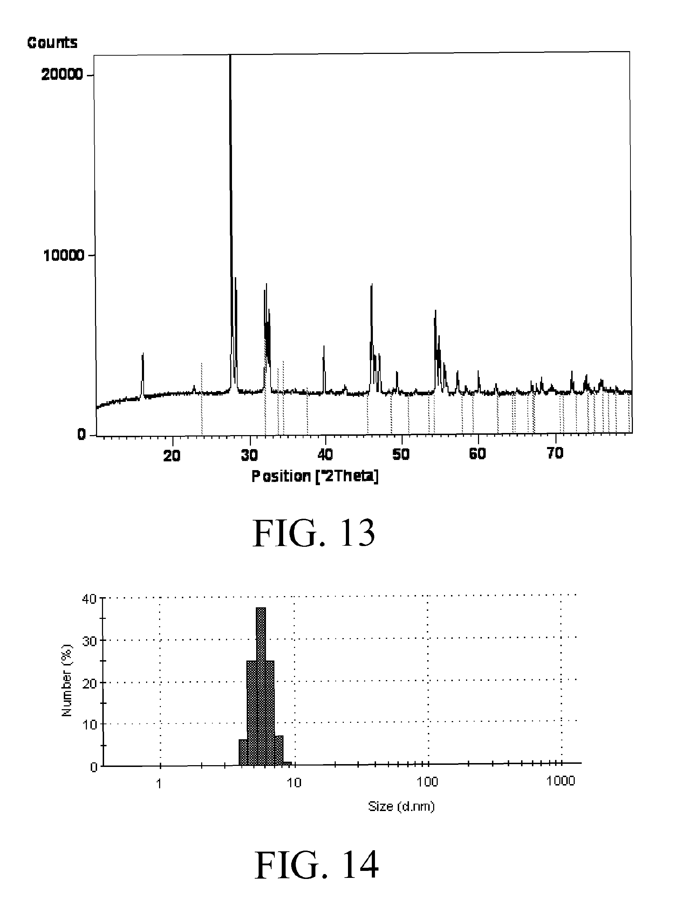

In a process similar to Example 1, but without ytterbium, Nd₂O₃ nanoparticles were prepared. FIG. 14 shows the histographic particle size distribution of the stabilized nanoparticles in aqueous solution as obtained by dynamic light scattering. The mean particle size of the nanoparticles is approximately 5.6 nm.

### Comparative Example 4

### Preparation of Gd₂O₃:Nd microparticles

As a comparative example, the preparation of Gd₂O₃:Nd is carried with the same process steps as above in Example 2, but without the use of complexing agent and stabiliser.

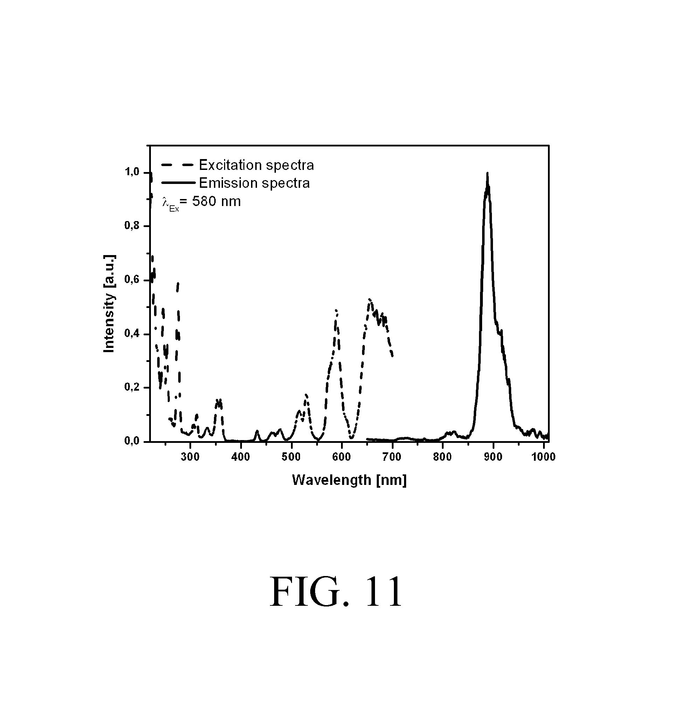

During the alkaline hydrolysis, a white suspension is formed. The resulting solids were separated by filtration and washed with water. After drying of the powder, it is annealed according to the procedure of Example 2. FIG. 11 shows the excitation and emission (with an excitation at 584 nm) spectra of the annealed particles.

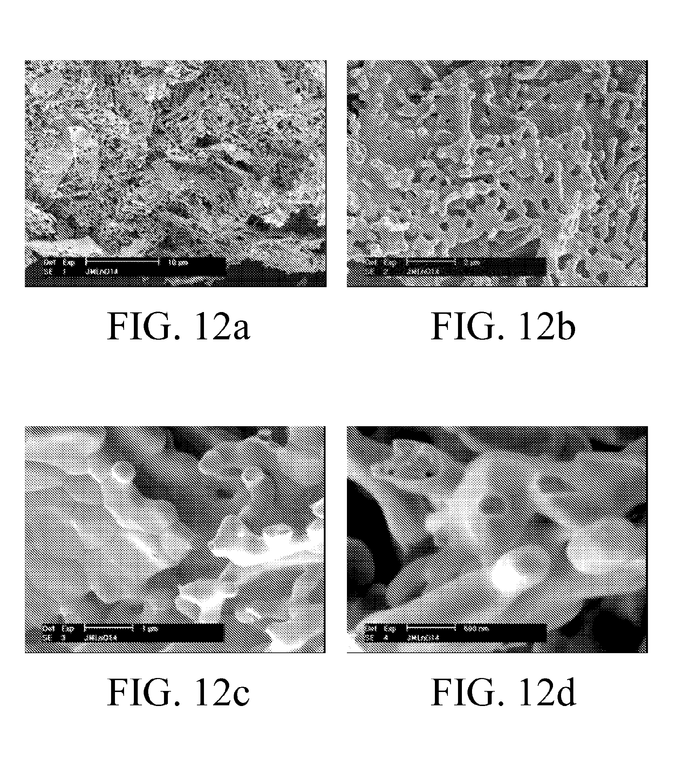

The product is a white powder consisting of microparticles with necks as shown by the SEM images in FIGs 12a to 12d. An X-ray powder diffraction pattern is shown in FIG 13.

### Comparative Example 5

9.8 mmol gadolinium acetate and 0.5 mmol neodymium acetate are dissolved in deionized water. Then, 10.3 mmol citric acid is added to the clear solution. After alkalisation, a white precipitate is formed in a spontaneous reaction. After a few minutes, a white deposit can be recovered. The deposit does not contain any nanoparticles.

### Comparative Example 6

19.57 mmol gadolinium acetate, 1.03 mmol neodymium acetate and 10 mmol ammonium EDTA are dissolved in water. After the addition of 5.3 mmol citric acid, alkalisation, a white precipitate is formed. After a few minutes, a white deposit can be recovered. The deposit does not contain any nanoparticles.

## Claims

1. A method for the preparation of nanoparticles comprising the steps of
a) dissolving at least one metal salt and ethylenediaminetetraacetic acid in an aqueous solvent, wherein the metal is selected from scandium, ytterbium, lanthanum, cerium, praseodymium, neodymium, samarium, europium, gadolinium, terbium, dysprosium, holmium, erbium, thulium, ytterbium, and lutetium;
b) adding citric acid to the solution;
c) forming stabilized nanoparticles by homogeneous controlled alkaline hydrolysis of the metal complexes;
d) reducing the amount of aqueous solvent by evaporation of solvent; and
e) annealing the resulting nanoparticles.

2. The method of claim 1, wherein the metal salt is in the form of an acetate, formiate, sulfate, nitrate, nitrite, chloride, bromide, or propionate.

3. The method of any of the preceding claims, wherein the molar ratio of EDTA to metal ions of the metal salt is ≥ 1:1, preferably in the range of 0.9:1 1 to 2:1, more preferably 0.98:1 to 1.5, and most preferably 1:1 to 1.2:1.

4. The method of any of the preceding claims, wherein the molar ratio of citric acid to EDTA is in the range of 0.05:1 to 1:1, more preferably 0.1:1 to 1:1, and most preferably 0.5:1 1 to 1:1.

5. The method of any of the preceding claims, wherein the aqueous solvent has a water content of at least 80 wt.-%, preferably at least 95 wt.-%, more preferably at least 98 wt.-%, even more preferably at least 99.5 wt.-%, and most preferably 100 wt.-%.

6. The method of any of the preceding claims, wherein the nanoparticles are of the form M₂O₃, (M^{a}₁₋ₓM^{b}ₓ)₂O₃, or (M^{a}_{1-x-y}M^{b}ₓM^{c}_{y})₂O₃, wherein M, M^{a}, M^{b}, and M^{c} are independently selected from scandium, ytterbium, lanthanum, cerium, praseodymium, neodymium, samarium, europium, gadolinium, terbium, dysprosium, holmium, erbium, thulium, ytterbium, and lutetium, and x and y are in the range of 0 to 1 with the proviso that x+y ≤ 1.

7. The method of any of the preceding claims, wherein the nanoparticles are formed at a temperature in the range of 25 to 120°C, preferably at 30 to 100°C, more preferably at 35 to 80°C, and/or at a pressure in the range of 0.8 to 10 bar, preferably 1 to 5 bar.

8. The method of any of the preceding claims, wherein the evaporation of the solvent is achieved at a temperature in the range of 25 to 120°C, preferably at 30 to 100°C, more preferably at 35 to 80°C, and/or at a pressure of below 2 bar, preferably at 0.001 to 1 bar.

9. The method of any of the preceding claims, wherein the annealing is achieved at a temperature of 500 to 1200°C, preferably 600 to 1000°C, more preferably at 750 to 950°C, and most preferably at 800 to 900°C, and preferably for a period of 2 to 10 hours.

10. The method of any of the preceding claims, wherein after the annealing the cooling to room temperature is a natural cooling of the nanoparticles, preferably over a period of less than 10 hours, more preferably less than 5 hours, and most preferably within 2 to 10 hours.

11. The method of any of the preceding claims, wherein the nanoparticles have a size in the range of 1 to 50 nm, preferably in the range of 2 to 40 nm, in the range of 2 to 30 nm or in the range of 4 to 15 nm.

12. The method of any of the preceding claims, wherein the nanoparticles have a monodisperse particle distribution.

13. Nanoparticles, obtainable by a method of any of the claims 1 to 12.

14. Use of the nanoparticles of claim 13 for coating of display glass, windows glass, pigments, preferably luminescent pigments, tapes, preferably plastic tapes, semiconductor elements, or a heterogeneous catalyst.

15. Use of the nanoparticles of claim 13 in a device for medical diagnostics, medical imaging, medical therapy or as a contrast agent or precursor thereof, a luminescent marker or precursor thereof or as molecular carrier.
